# EUROPEAN PATENT APPLICATION

(11) **EP 4 701 147 A1**
(43) Date of publication of application: **25.02.2026**
(21) Application number: 24792056.4
(22) Date of filing: 17.04.2024
(51) Int. Cl.: H04L 41/0654

(54) **NETWORK ANOMALY RECOVERY METHOD AND APPARATUS, ELECTRONIC DEVICE, SERVER, AND STORAGE MEDIUM**

(30) Priority: 21.04.2023 CN 202310442807
(71) Applicant: Vivo Mobile Communication Co., Ltd., Dongguan, Guangdong 523863 (CN)
(72) Inventor: LIU, Xiaolei, Dongguan, Guangdong 523863 (CN)
(74) Representative: Murgitroyd & Company
(86) International application number: PCT/CN2024/088410
(87) International publication number: WO 2024/217471

(57) **Abstract**

This application belongs to the field of communication technologies, and discloses a network anomaly recovery method and apparatus, an electronic device, a server, and a storage medium. The method includes: sending a target data packet to a server when the first electronic device uses a network of a first cell, where the target data packet includes cell information of the first cell and operator information of the first electronic device; receiving a first cell anomaly list sent by the server, where the first cell anomaly list includes N anomaly time periods and a network recovery strategy corresponding to each anomaly time period, where the N anomaly time periods are time periods in which a network anomaly occurs when a second electronic device uses the network of the first cell, and the second electronic device has a same operator as the first electronic device; predicting, according to the first cell anomaly list, that a network anomaly occurs on the first electronic device in a target time period; and executing, when a system moment of the first electronic device is in the target time period, a target network recovery strategy corresponding to the target time period.

## Description

### CROSS-REFERENCE TO RELATED APPLICATIONS

This application claims priority to Chinese Patent Application No. 202310442807.X filed in China on April 21, 2023, which is incorporated herein by reference in its entirety.

### TECHNICAL FIELD

This application relates to the field of communication technologies, and specifically, to a network anomaly recovery method and apparatus, an electronic device, a server, and a storage medium.

### BACKGROUND

With the development of mobile networks and electronic devices, a user has an increasingly strong requirement for network access, and hopes to smoothly access a web page, perform browsing and consulting, watch a video, and play a game anytime and anywhere. In addition, the user also encounters various internet issues every day, for example, a network anomaly problem.

Currently, in the related art, the user may move the electronic device out of a network anomaly area, to access another network, or the user may resolve the network anomaly problem by restarting a terminal device to reconnect to a network.

However, the foregoing two methods only are used to perform anomaly processing after the network anomaly occurs, and it takes some time to resolve the network issues. Consequently, continuity of using the network by the electronic device is affected. In this way, an existing solution cannot effectively resolve the network anomaly problem.

### SUMMARY

An objective of embodiments of this application is to provide a network anomaly recovery method and apparatus, an electronic device, a server, and a storage medium, by proactively executing a network recovery strategy corresponding to a potential network anomaly before it occurs, to improve smoothness and continuity of using the network by the electronic device.

According to a first aspect, an embodiment of this application provides a network anomaly recovery method, applied to a first electronic device. The method includes: sending a target data packet to a server when the first electronic device uses a network of a first cell, where the target data packet includes cell information of the first cell and operator information of the first electronic device; receiving a first cell anomaly list sent by the server, where the first cell anomaly list includes N anomaly time periods and a network recovery strategy corresponding to each anomaly time period, where the N anomaly time periods are time periods in which a network anomaly occurs when a second electronic device uses the network of the first cell, and the second electronic device has the same operator as the first electronic device; predicting, according to the first cell anomaly list, that a network anomaly occurs on the first electronic device in a target time period; and executing, when a system moment of the first electronic device is in the target time period, a target network recovery strategy corresponding to the target time period, where N is a positive integer.

According to a second aspect, an embodiment of this application provides a network anomaly recovery apparatus, applied to an electronic device, where the apparatus includes: a sending module, a receiving module, a prediction module, and an execution module. The sending module is configured to send a target data packet to a server when the first electronic device uses a network of a first cell, where the target data packet includes cell information of the first cell and operator information of the first electronic device. The receiving module is configured to receive a first cell anomaly list sent by the server, where the first cell anomaly list includes N anomaly time periods and a network recovery strategy corresponding to each anomaly time period, where the N anomaly time periods are time periods in which a network anomaly occurs when a second electronic device uses the network of the first cell, and the second electronic device has the same operator as the first electronic device. The prediction module is configured to predict, according to the first cell anomaly list, that a network anomaly occurs on the first electronic device in a target time period. The execution module is configured to execute, when a system moment of the first electronic device is in the target time period, a target network recovery strategy corresponding to the target time period, where N is a positive integer.

According to a third aspect, an embodiment of this application provides a network anomaly recovery method, applied to a first electronic device. The method includes: receiving a target data packet sent by a first electronic device, where the target data packet includes cell information of a first cell and operator information of the first electronic device, and the first cell is a cell of a network used by the first electronic device; and sending a first cell anomaly list to the first electronic device, where the first cell anomaly list includes: N anomaly time periods and a network recovery strategy corresponding to each anomaly time period, where the N anomaly time periods are time periods in which a network anomaly occurs when a second electronic device uses a network of the first cell, and the second electronic device has the same operator as the first electronic device.

According to a fourth aspect, an embodiment of this application provides a network anomaly recovery apparatus, applied to a server. The apparatus includes: a receiving module and a sending module. The receiving module is configured to receive a target data packet sent by a first electronic device, where the target data packet includes cell information of a first cell and operator information of the first electronic device, and the first cell is a cell of a network used by the first electronic device. The sending module is configured to send a first cell anomaly list to the first electronic device, where the first cell anomaly list includes: N anomaly time periods and a network recovery strategy corresponding to each anomaly time period, where the N anomaly time periods are time periods in which a network anomaly occurs when a second electronic device uses a network of the first cell, and the second electronic device has the same operator as the first electronic device.

According to a fifth aspect, an embodiment of this application provides an electronic device, where the electronic device includes a processor and a memory, the memory stores a program or instructions executable on the processor, and when the program or the instructions are executed by the processor, the steps of the method according to the first aspect are implemented.

According to a sixth aspect, an embodiment of this application provides a server, including a processor and a memory, where the memory stores a program or instructions executable on the processor, and when the program or the instructions are executed by the processor, the steps of the method according to the third aspect are implemented.

According to a seventh aspect, an embodiment of this application provides a readable storage medium. The readable storage medium stores a program or instructions. When the program or the instructions are executed by a processor, the steps of the method according to the first aspect are implemented, or the steps of the method according to the third aspect are implemented.

According to an eighth aspect, an embodiment of this application provides a chip. The chip includes a processor and a communication interface, where the communication interface is coupled to the processor, and the processor is configured to execute a program or instructions, to implement the method according to the first aspect, or implement the method according to the third aspect.

According to a ninth aspect, an embodiment of this application provides a computer program product. The program product is stored in a storage medium, and the program product is executed by at least one processor to implement the method according to the first aspect, or implement the method according to the third aspect.

In the embodiments of this application, when using the network of the first cell, the electronic device sends the target data packet to the server, and receives the first cell anomaly list sent by the server. The electronic device predicts, according to the first cell anomaly list, that the network anomaly occurs on the first electronic device in the target time period. When the system moment of the first electronic device is in the target time period, the electronic device executes the target network recovery strategy corresponding to the target time period, and N is a positive integer. In this way, before the network anomaly occurs, the electronic device may send the target data packet to the server and receive the first cell anomaly list sent by the server. When the system moment of the first electronic device is in the target time period, the electronic device executes the network recovery strategy corresponding to the network anomaly in advance, to avoid network use discontinuity caused by the network anomaly, and effectively resolve the network anomaly problem, thereby improving smoothness and continuity of using the network by the electronic device.

### BRIEF DESCRIPTION OF THE DRAWINGS

FIG. 1 is a schematic diagram of a network anomaly recovery method applied to an electronic device according to an embodiment of this application;
FIG. 2 is a schematic diagram of a network anomaly recovery method applied to an electronic device according to an embodiment of this application;
FIG. 3 is a schematic diagram of a network anomaly recovery method applied to a server according to an embodiment of this application;
FIG. 4 is a schematic diagram of a network anomaly recovery method applied to a server according to an embodiment of this application;
FIG. 5 is a schematic diagram of interaction between an electronic device and a server according to an embodiment of this application;
FIG. 6 is a schematic structural diagram of a network anomaly recovery apparatus applied to an electronic device according to an embodiment of this application;
FIG. 7 is a schematic structural diagram of a network anomaly recovery apparatus applied to a server according to an embodiment of this application;
FIG. 8 is a schematic diagram 1 of a hardware structure of an electronic device according to an embodiment of this application;
FIG. 9 is a schematic diagram 2 of a hardware structure of an electronic device according to an embodiment of this application; and
FIG. 10 is a schematic diagram of a hardware structure of a server according to an embodiment of this application.

### DETAILED DESCRIPTION

The technical solutions in embodiments of this application are clearly described below with reference to the accompanying drawings in embodiments of this application. Apparently, the described embodiments are merely some rather than all of embodiments of this application. All other embodiments obtained by a person of ordinary skill in the art based on embodiments of this application shall fall within the protection scope of this application.

The specification and claims of this application, and terms "first" and "second" are used to distinguish similar objects, but are unnecessarily used to describe a specific sequence or order. It may be understood that the terms used in such a way is interchangeable in proper circumstances, so that embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

A network anomaly recovery method provided in the embodiments of this application is described in detail below by using specific embodiments and application scenarios with reference to the accompanying drawings.

The network anomaly recovery method in the embodiments of this application may be applied to a scenario in which an anomaly occurs in a network of an electronic device.

With the development of mobile networks and electronic devices, a user has an increasingly strong requirement for network access, and hopes to smoothly access a web page, perform browsing and consulting, watch a video, and play a game anytime and anywhere. In addition, the user also encounters various internet issues every day. These problems may be common or unique. The user may encounter various problems of poor network access experience every day, for example, a temporary fault of a base station, and although a signal is available, the base station cannot access the internet due to excessive load within a specified period of time. Although operators monitor and resolve related problems, because the operators maintain a large quantity of base stations, many problems are difficult to be handled in time. Therefore, the user repeatedly encounters problems at a particular time point and place, and experience of using a mobile phone is greatly worsen.

In the existing solution, the user may move the electronic device out of a network anomaly area, to access another network, or the user may restart a terminal device in a manner such as reconnecting to a network, to resolve the network anomaly problem.

However, the foregoing two methods are used to perform anomaly processing after an anomaly occurs in the network, and it takes some time to resolve the network issues. Consequently, this will affect continuity of electronic device' s network usage. In this way, an existing solution cannot effectively resolve the network anomaly problem.

In the embodiments of this application, when using the network of the first cell, the first electronic device sends the target data packet to the server, and receives the first cell anomaly list sent by the server. The first electronic device predicts, according to the first cell anomaly list, that the network anomaly occurs on the first electronic device in the target time period. When the system moment of the first electronic device is in the target time period, the electronic device executes the target network recovery strategy corresponding to the target time period, and N is a positive integer. In this way, before the network anomaly occurs, the first electronic device may send the target data packet to the server and receive the first cell anomaly list sent by the server. When the system moment of the first electronic device is in the target time period, the first electronic device executes the network recovery strategy corresponding to the network anomaly in advance, to avoid network use discontinuity caused by the network anomaly, and effectively resolve the network anomaly problem, thereby improving smoothness and continuity of using the network by the electronic device.

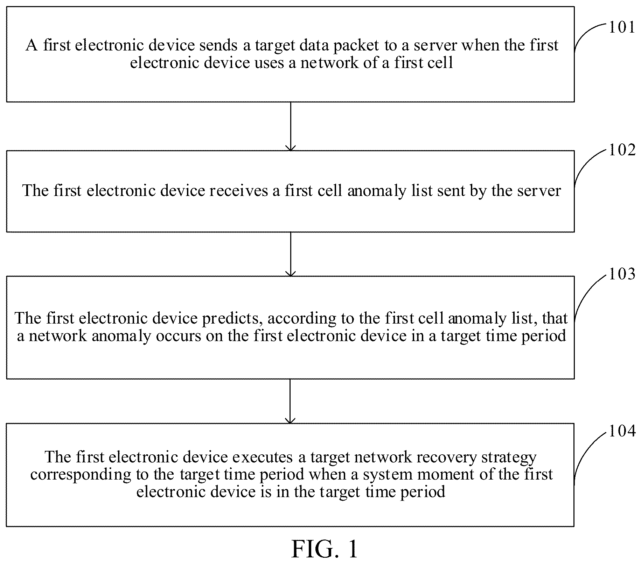

Some embodiments of this application provide a network anomaly recovery method, applied to a first electronic device. FIG. 1 is a flowchart of a network anomaly recovery method according to an embodiment of this application. As shown in FIG. 1, the network anomaly recovery method provided in the embodiments of this application may include the following step 101 to step 104.

Step 101: A first electronic device sends a target data packet to a server when the first electronic device uses a network of a first cell.

In some embodiments of this application, the target data packet includes cell information of the first cell and operator information of the first electronic device.

In some embodiments of this application, the first electronic device may include, but is not limited to, a phone having a network access function, an electronic watch having a network access function, a phone having a call function, an electronic watch having a call function, and another electronic device having a network access function or a call function.

In some embodiments of this application, the first cell is a cell of a network used by the first electronic device.

In some embodiments of this application, the server may include but is not limited to: an operator server and an operator base station.

In some embodiments of this application, the cell information of the first cell may include, but is not limited to, cell location information of the first cell and cell identifier information of the first cell.

In some embodiments of this application, the operator information of the first electronic device may include, but is not limited to, an operator category of the first electronic device and an operator name of the first electronic device.

For example, an example in which the first electronic device is a mobile phone is used. As shown in Table 1, the cell information of the first cell and the operator information of the first electronic device that are included in the target data packet are shown.

**Table 1**

| Cell information of a cell A | Operator information of an electronic device B |
|---|---|
| Cell geographic area: city A | Operator category B |
| Cell identifier: 11223344 | Operator name b |

In the foregoing Table 1, an example in which the first cell is the cell A, and the first electronic device is the electronic device b is used. As shown in Table 1, the target data packet includes the cell information of the cell A and the operator information of the electronic device B. The cell information of the cell A includes the cell geographic area of the cell A, the city A, and the cell identifier: 11223344 of the cell A, and the operator information of the electronic device B includes the operator category B and the operator name b of the electronic device B.

In some embodiments of this application, when the electronic device uses the network of the first cell, the first electronic device sends the cell information of the first cell used by the first electronic device and the operator information of the first electronic device to the server, so that the server returns the anomaly information corresponding to both the cell information of the first cell and the operator information of the first electronic device to the first electronic device.

Step 102: The first electronic device receives the first cell anomaly list sent by the server.

In some embodiments of this application, the first cell anomaly list includes N anomaly time periods and a network recovery strategy corresponding to each anomaly time period, where N is a positive integer.

In some embodiments of this application, the N anomaly time periods are time periods in which a network anomaly occurs when a second electronic device uses the network of the first cell, and the second electronic device has the same operator as the first electronic device.

In some embodiments of this application, the second electronic device may include, but is not limited to, a phone having a network access function, an electronic watch having a network access function, a phone having a call function, an electronic watch having a call function, and another electronic device having a network access function or a call function.

In some embodiments of this application, information in the first cell anomaly list is anomaly information that corresponds to both the cell information of the first cell and the operator information of the first electronic device.

In some embodiments of this application, the cell anomaly list includes: an anomaly time period in which an anomaly occurs when each cell is in use and a network recovery strategy corresponding to the anomaly time period.

In some embodiments of this application, the network recovery strategy corresponding to each anomaly time period may include at least one of the following: switching from a 5G network standard to a 4G network standard, switching from a current cell to another cell, switching from the 4G network standard to the 5G network standard, barring a cell, and deactivating a frequency.

In some embodiments of this application, the cell anomaly list further includes at least one of the following: a network standard corresponding to a cell, operator information corresponding to an electronic device when an anomaly occurs in a network of the cell, a geographic area corresponding to the cell, a cell identifier, a user quantity in each anomaly time period in the cell, and an anomaly user proportion in each anomaly time period in the cell.

In some embodiments of this application, the network standard corresponding to the cell may include but is not limited to: 2G, 3G, 4G, and 5G.

In some embodiments of this application, the operator information corresponding to the electronic device when the anomaly occurs in the network of the cell includes the operator category of the electronic device and the operator name of the electronic device.

In some embodiments of this application, the user quantity in each anomaly time period in the cell is a quantity of users using a network in each anomaly time period in the cell.

In some embodiments of this application, the anomaly user proportion in each anomaly time period in the cell: anomaly user proportion=quantity of users in a cell in which an anomaly occurs in one time period/total quantity of users passing through the cell in the time period. When the user quantity is calculated, a same user is counted once on a same day, but different users are recorded as different users on different days. For example, if a quantity of users in a cell in which an anomaly occurs in one time period is 35, and a total quantity of users passing through the cell in the time period is 50, the anomaly user proportion=35/50=70%.

For example, Table 2 shows information included in the first cell anomaly list.

**Table 2**

| Geographic area | Network standard | Operator information | Cell identifier | Anomaly user proportion | User quantity | Anomaly time period | Optimal recovery action |
|---|---|---|---|---|---|---|---|
| City A | 4G | B | 11223344 | 90% | 50 | 9:00-10:00 | Enable 5G |
| City A | 5G | B | 11223344 | 95% | 100 | 11:00-12:00 | Disable 5G |
| City A | 2G | B | 11223344 | 85% | 40 | 19:00-20:00 | Enable 5G |
| City A | 3G | B | 11223344 | 80% | 60 | 22:00-23:00 | Bar a cell |
| ... | ... | ... | ... | ... | ... | ... | ... |

In the foregoing Table 2, the geographic area represents a geographic area in which the electronic device is located, for example, the city A or the city B. The network standard represents a network standard used by the electronic device, for example, a 5G network, a 4G network, a 3G network, and a 2G network. The operator information represents an operator to which the network used by the electronic device belongs, for example, the operator A or the operator B. The cell identifier represents a cell in which the electronic device camps, for example, the cell 11223344. The user quantity represents a total quantity of users in one anomaly time period. The anomaly time period represents a time period in which a network anomaly occurs on the electronic device. Anomaly user proportion=quantity of users in a cell in which an anomaly occurs in one time period/total quantity of users passing through the cell in the time period. The optimal recovery action represents a most effective network recovery strategy when a network anomaly occurs on the electronic device.

Table 2 shows the cell information of the first cell: a cell geographic area of the first cell: the city A, a cell identifier of the first cell: 11223344, and operator information of the first electronic device: anomaly information corresponding to an operator category B of the first electronic device.

For example, when the cell identifier of the city A is the cell 11223344, the time period is 9:00-10:00, the network standard is 4G, and the operator information is B, a quantity of electronic devices that camp in the cell is 50, anomalies occur in 45 electronic devices, the anomaly user proportion is 90%, and the optimal recovery action is enabling 5G.

For example, when the cell identifier of the city A is the cell 11223344, the time period is 11:00-12:00, the network standard is 5G, and the operator information is B, a quantity of electronic devices that camp in the cell is 100, anomalies occur in 95 electronic devices, the anomaly user proportion is 95%, and the optimal recovery action is disabling 5G.

For example, when the cell identifier of the city A is the cell 11223344, the time period is 19:00-20:00, the network standard is 2G, and the operator information is B, a quantity of electronic devices that camp in the cell is 40, anomalies occur in 34 electronic devices, the anomaly user proportion is 85%, and the optimal recovery action is enabling 5G.

For example, when the cell identifier of the city A is the cell 11223344, the time period is 22:00-23:00, the network standard is 3G, and the operator information is B, a quantity of electronic devices that camp in the cell is 60, anomalies occur in 48 electronic devices, the anomaly user proportion is 80%, and the optimal recovery action is barring a cell.

For another example, Table 3 shows information included in the cell anomaly list in the server.

**Table 3**

| Geographic area | Network standard | Operator information | Cell identifier | Anomaly user proportion | User quantity | Anomaly time period | Optimal recovery action |
|---|---|---|---|---|---|---|---|
| City A | 4G | B | 11223344 | 90% | 50 | 9:00-10:00 | Enable 5G |
| City A | 5G | B | 11223344 | 95% | 100 | 19:00-20:00 | Disable 5G |
| City A | 2G | B | 11223344 | 85% | 40 | 11:00-12:00 | Enable 5G |
| City A | 3G | B | 11223344 | 80% | 60 | 22:00-23:00 | Bar a cell |
| City B | 4G | A | 22334455 | 90% | 50 | 9:00-10:00 | Enable 5G |
| City B | 5G | C | 33445566 | 95% | 100 | 19:00-20:00 | Disable 5G |
| City C | 2G | B | 44556677 | 85% | 40 | 11:00-12:00 | Enable 5G |
| ... | ... | ... | ... | ... | ... | ... | ... |

In the foregoing Table 3, the geographic area represents a geographic area in which the electronic device is located, for example, the city A, the city B, or the city C. The network standard represents a network standard used by the electronic device, for example, a 5G network, a 4G network, a 3G network, and a 2G network. The operator information represents an operator to which the network used by the electronic device belongs, for example, the operator A, the operator B, or the operator C. The cell identifier represents a cell in which the electronic device camps, for example, the cell 11223344, the cell 22334455, the cell 33445566, and the cell 44556677. The user quantity represents a total quantity of users in one anomaly time period. The anomaly time period represents a time period in which a network anomaly occurs on the electronic device. Anomaly user proportion=quantity of users in a cell in which an anomaly occurs in one time period/total quantity of users passing through the cell in the time period. The optimal recovery action represents a most effective network recovery strategy when a network anomaly occurs on the electronic device.

For example, when the cell identifier of the city A is the cell 11223344, the time period is 9:00-10:00, the network standard is 4G, and the operator information is B, a quantity of electronic devices that camp in the cell is 50, anomalies occur in 45 electronic devices, the anomaly user proportion is 90%, and the optimal recovery action is enabling 5G.

For example, when the cell identifier of the city A is the cell 11223344, the time period is 11:00-12:00, the network standard is 5G, and the operator information is B, a quantity of electronic devices that camp in the cell is 100, anomalies occur in 95 electronic devices, the anomaly user proportion is 95%, and the optimal recovery action is disabling 5G.

For example, when the cell identifier of the city A is the cell 11223344, the time period is 19:00-20:00, the network standard is 2G, and the operator information is B, a quantity of electronic devices that camp in the cell is 40, anomalies occur in 34 electronic devices, the anomaly user proportion is 85%, and the optimal recovery action is enabling 5G.

For example, when the cell identifier of the city A is the cell 11223344, the time period is 22:00-23:00, the network standard is 3G, and the operator information is B, a quantity of electronic devices that camp in the cell is 60, anomalies occur in 48 electronic devices, the anomaly user proportion is 80%, and the optimal recovery action is barring a cell.

For example, when the cell identifier of the city B is the cell 22334455, the time period is 9:00-10:00, the network standard is 4G, and the operator information is A, a quantity of electronic devices that camp in the cell is 50, anomalies occur in 45 electronic devices, the anomaly user proportion is 90%, and the optimal recovery action is enabling 5G.

For example, when the cell identifier of the city B is the cell 33445566, the time period is 11:00-12:00, the network standard is 5G, and the operator information is C, a quantity of electronic devices that camp in the cell is 100, anomalies occur in 95 electronic devices, the anomaly user proportion is 95%, and the optimal recovery action is disabling 5G.

For example, when the cell identifier of the city C is the cell 44556677, the time period is 19:00-20:00, the network standard is 2G, and the operator information is B, a quantity of electronic devices that camp in the cell is 40, anomalies occur in 34 electronic devices, the anomaly user proportion is 85%, and the optimal recovery action is enabling 5G.

In some embodiments of this application, the first electronic device receives the first cell anomaly list returned by the server, the first cell anomaly list stores anomaly information that corresponds to both the cell information of the first cell and the operator information of the first electronic device, so that the first electronic device executes the network recovery strategy according to the information in the first cell anomaly list.

Step 103: The first electronic device predicts, according to the first cell anomaly list, that a network anomaly occurs on the first electronic device in a target time period.

In some embodiments of this application, the target time period is one time period in the N anomaly time periods.

For example, in the foregoing Table 2, the N anomaly time periods are 9:00-10:00, 11:00-12:00, 19:00-20:00, and 22:00-23:00. The target time period may be any one of the four time periods: 9:00-10:00, 11:00-12:00, 19:00-20:00, and 22:00-23:00.

In some embodiments of this application, the foregoing prediction may be understood as a case in which the network anomaly recovery apparatus predicts, according to the first cell anomaly list, that a network anomaly occurs on the first electronic device in an anomaly time period in the first cell anomaly list.

In some embodiments of this application, the first electronic device predicts, according to the anomaly time period in the first cell anomaly list, that the network anomaly occurs on the first electronic device in any one of the anomaly time periods, so that the first electronic device executes the network recovery strategy corresponding to the network anomaly in advance.

Step 104: The first electronic device executes, when a system moment of the first electronic device is in the target time period, a target network recovery strategy corresponding to the target time period.

For example, in the foregoing Table 2, the target time periods may be 9:00-10:00, 11:00-12:00, 19:00-20:00, and 22:00-23:00. The target network recovery strategies may be enabling 5G, disabling 5G, and barring a cell. For example, a system moment of the first electronic device is in the time period 9:00-10:00, and the network anomaly recovery apparatus executes a network recovery strategy of enabling 5G corresponding to the time period 9:00-10:00. For example, a system moment of the first electronic device is in the time period 11:00-12:00, and the network anomaly recovery apparatus executes a network recovery strategy of disabling 5G corresponding to the time period 11:00-12:00. For example, a system moment of the first electronic device is in the time period 19:00-20:00, and the network anomaly recovery apparatus executes a network recovery strategy of enabling 5G corresponding to the time period 19:00-20:00. For example, a system moment of the first electronic device is in the time period 22:00-23:00, and the network anomaly recovery apparatus executes a network recovery strategy of barring a cell corresponding to the time period 22:00-23:00.

In some embodiments of this application, the first electronic device executes, according to the anomaly time period in the first cell anomaly list and when the system moment of the first electronic device is in the anomaly time period, a network recovery strategy corresponding to the anomaly time period, to improve smoothness and continuity of using the network by the electronic device.

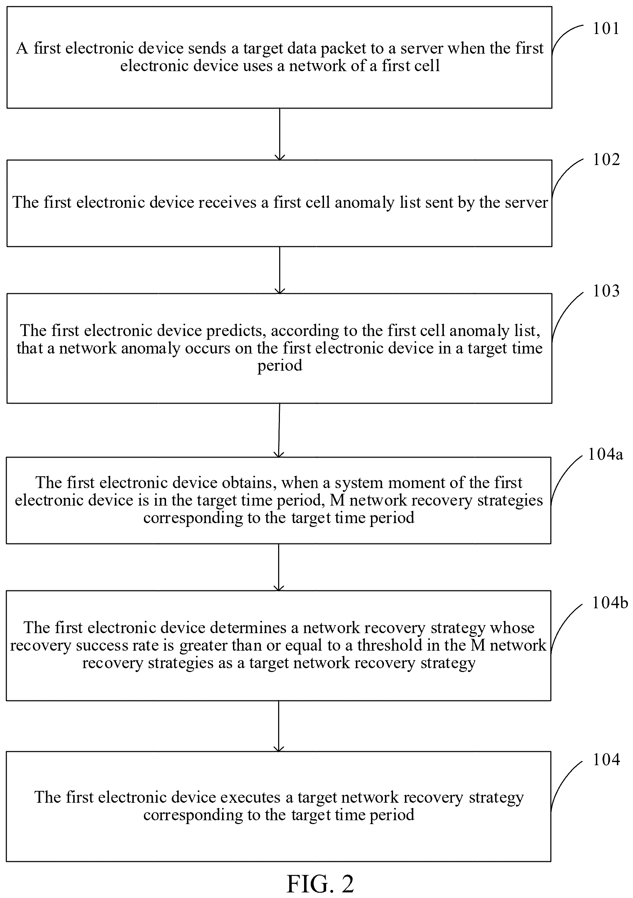

In some embodiments of this application, with reference to FIG. 1, as shown in FIG. 2, before "the first electronic device executes the target network recovery strategy corresponding to the target time period" in step 104, the network anomaly recovery method provided in some embodiments of this application further includes the following step 104a and step 104b.

Step 104a: The first electronic device obtains, when the system moment of the first electronic device is in the target time period, M network recovery strategies corresponding to the target time period.

In some embodiments of this application, the M network recovery strategies are network recovery strategies that are executed by the second electronic device when a number of anomalies exceeds a preset threshold.

For example, Table 4 shows the M network recovery strategies corresponding to the target time period of the first cell.

**Table 4**

| Anomaly time period | Number of times of camping | Number of anomalies | Anomaly user proportion | Optimal recovery action | Number of times of recovery | Number of times of recovery success | Recovery success rate |
|---|---|---|---|---|---|---|---|
| 9:00-10:00 | 50 | 45 | 90% | Enable 5G | 45 | 42 | 93.33% |
| 11:00-12:00 | 100 | 95 | 95% | Disable 5G | 95 | 90 | 94.74% |
| 19:00-20:00 | 40 | 34 | 85% | Enable 5G | 34 | 30 | 88.24% |
| 22:00-23:00 | 60 | 48 | 80% | Bar a cell | 48 | 45 | 93.75% |
| ... | ... | ... | ... | ... | ... | ... | ... |

In the foregoing Table 4, the anomaly time period represents a time period in which a network anomaly occurs on the second electronic device. The number of times of camping represents a number of times of camping of the second electronic device. The number of anomalies represents a number of anomalies on the second electronic device. Anomaly user proportion=quantity of users in a cell in which an anomaly occurs in one time period/total quantity of users passing through the cell in the time period. The optimal recovery action represents a most effective network recovery action when a network anomaly occurs on the second electronic device. The number of times of recovery represents a number of times of recovering performed by the second electronic device. The number of times of recovery success represents a number of times that the second electronic device recovers successfully. The recovery success rate=number of times that the second electronic device recovers successfully/number of times that the second electronic device performs recovering.

In the foregoing Table 4, a preset threshold of anomalies is 20, and a number of network anomalies corresponding to the foregoing recovery strategy is greater than 20. That is, the four network recovery strategies are network recovery strategies that are executed when a quantity of times that an anomaly occurs on the second electronic device is greater than the preset threshold of 20.

In some embodiments of this application, the first electronic device obtains a network recovery strategy that is executed by the second electronic device when a number of anomalies is greater than the preset threshold, to avoid obtaining a network recovery strategy corresponding to an occasional anomaly, thereby improving accuracy of predicting, by the first electronic device, that a network anomaly occurs on the first electronic device in the target time period.

Step 104b: The first electronic device determines a network recovery strategy whose recovery success rate is greater than or equal to a threshold in the M network recovery strategies as the target network recovery strategy, where M is a positive integer.

For example, Table 5 shows a network recovery strategy whose recovery success rate is greater than or equal to a threshold in the network recovery strategies corresponding to the target time period of the first cell.

**Table 5**

| Anomaly time period | Number of times of camping | Number of anomalies | Anomaly user proportion | Optimal recovery action | Number of times of recovery | Number of times of recovery success | Recovery success rate |
|---|---|---|---|---|---|---|---|
| 9:00-10:00 | 50 | 45 | 90% | Enable 5G | 45 | 42 | 93.33% |
| 11:00-12:00 | 100 | 95 | 95% | Disable 5G | 95 | 90 | 94.74% |
| 19:00-20:00 | 40 | 34 | 85% | Enable 5G | 34 | 30 | 88.24% |
| 22:00-23:00 | 60 | 48 | 80% | Bar a cell | 48 | 45 | 93.75% |
| ... | | ... | | | | | |

In the foregoing Table 5, the anomaly time period represents a time period in which a network anomaly occurs on the second electronic device. The number of times of camping represents a number of times of camping of the second electronic device. The number of anomalies represents a number of anomalies on the second electronic device. Anomaly user proportion=quantity of users in a cell in which an anomaly occurs in one time period/total quantity of users passing through the cell in the time period. The optimal recovery action represents a most effective network recovery action when a network anomaly occurs on the second electronic device. The number of times of recovery represents a number of times of recovering performed by the second electronic device. The number of times of recovery success represents a number of times that the second electronic device recovers successfully. The recovery success rate=number of times that the second electronic device recovers successfully/number of times that the second electronic device performs recovering.

In the foregoing Table 5, a threshold of the network recovery strategy is 85%, and a recovery success rate corresponding to the foregoing recovery strategy is greater than the threshold 85%.

It should be noted that, when step 104a and step 104b are performed, step 104 in FIG. 2 is specifically "the first electronic device executes the target network recovery strategy corresponding to the target time period".

In some embodiments of this application, the first electronic device determines a network recovery strategy whose recovery success rate is greater than or equal to a threshold in the M network recovery strategies as the target network recovery strategy, so that a success rate of recovering the network anomaly by the network anomaly recovery apparatus is improved.

In some embodiments of this application, the network anomaly recovery method may further include the following step 201.

Step 201: When detecting that a network anomaly occurs on the first electronic device, the first electronic device writes, into a cell anomaly list, an anomaly time period in which the network anomaly occurs on the first electronic device and a network recovery strategy used by a user afterwards.

For example, Table 6 shows the anomaly time period in which the network anomaly occurs on the first electronic device and the network recovery strategy used by the user afterwards.

**Table 6**

| Geographic area | Network standard | Operator information | Cell identifier | Anomaly time period | Optimal recovery action |
|---|---|---|---|---|---|
| City A | 4G | B | 11223344 | 9:00-10:00 | Enable 5G |
| City A | 5G | B | 11223344 | 11:00-12:00 | Disable 5G |
| City A | 2G | B | 11223344 | 19:00-20:00 | Enable 5G |
| City A | 3G | B | 11223344 | 22:00-23:00 | Bar a cell |
| ... | | ... | | | |

In the foregoing Table 6, the geographic area represents a geographic area in which the electronic device is located, for example, the city A or the city B. The network standard represents a network standard used by the electronic device, for example, a 5G network, a 4G network, a 3G network, and a 2G network. The operator information represents an operator to which the network used by the electronic device belongs, for example, the operator A or the operator B. The cell identifier represents a cell in which the electronic device camps, for example, the cell 11223344. The anomaly time period represents a time period in which a network anomaly occurs on the electronic device. The optimal recovery action represents a most effective network recovery strategy when a network anomaly occurs on the electronic device.

For example, when the cell identifier of the city A is the cell 11223344, the time period is 9:00-10:00, the network standard is 4G, and the operator information is B, an anomaly occurs on the first electronic device, and the optimal recovery action is enabling 5G.

For example, when the cell identifier of the city A is the cell 11223344, the time period is 11:00-12:00, the network standard is 5G, and the operator information is B, an anomaly occurs on the first electronic device, and the optimal recovery action is disabling 5G.

For example, when the cell identifier of the city A is the cell 11223344, the time period is 19:00-20:00, the network standard is 2G, and the operator information is B, an anomaly occurs on the first electronic device, and the optimal recovery action is enabling 5G.

For example, when the cell identifier of the city A is the cell 11223344, the time period is 22:00-23:00, the network standard is 3G, and the operator information is B, an anomaly occurs on the first electronic device, and the optimal recovery action is barring a cell.

In some embodiments of this application, the first electronic device writes the time period in which the anomaly occurs on the first electronic device and the network recovery strategy used by the user afterwards into the cell anomaly list, so that when the current first electronic device is used as the second electronic device, subsequently, network anomaly information that appears in the server and the second electronic device corresponding to the another first electronic device is sent to the another first electronic device.

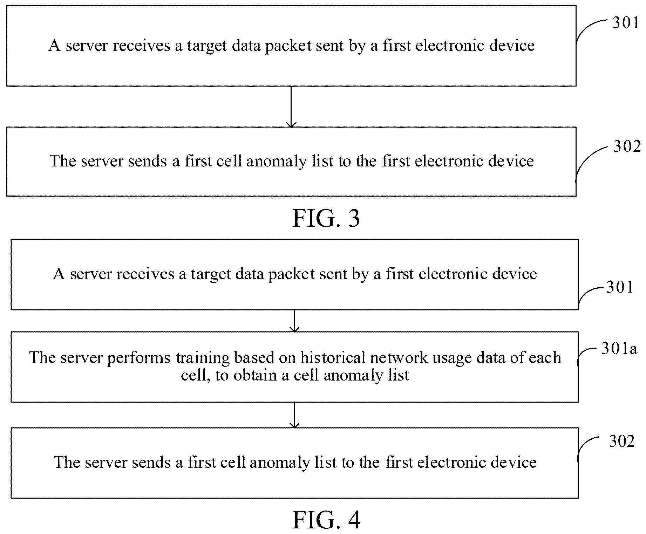

Some embodiments of this application provide a network anomaly recovery method, applied to a server. FIG. 3 is a flowchart of a network anomaly recovery method according to an embodiment of this application. As shown in FIG. 3, the network anomaly recovery method provided in the embodiments of this application may include the following step 301 and step 302.

Step 301: A server receives a target data packet sent by a first electronic device.

In some embodiments of this application, the target data packet includes cell information of a first cell and operator information of the first electronic device, and the first cell is a cell of a network used by the first electronic device.

In some embodiments of this application, for descriptions of the first electronic device, refer to descriptions in the foregoing embodiments, and details are not described herein again.

In some embodiments of this application, for descriptions of the cell information of the first cell, refer to descriptions in the foregoing embodiments, and details are not described herein again.

In some embodiments of this application, for descriptions of the operator information of the first electronic device, refer to descriptions in the foregoing embodiments, and details are not described herein again.

In some embodiments of this application, information in the first cell anomaly list is anomaly information that corresponds to both the cell information of the first cell and the operator information of the first electronic device. With reference to FIG. 3, as shown in FIG. 4, after step 301 is performed, the network anomaly recovery method provided in some embodiments of this application further includes the following step 301a.

Step 301a: The server performs training based on historical network usage data of each cell, to obtain a cell anomaly list.

In some embodiments of this application, the cell anomaly list includes: an anomaly time period in which an anomaly occurs when each cell is in use and a network recovery strategy corresponding to the anomaly time period.

In some embodiments of this application, the server obtains historical network usage data of at least one cell having a data service, and trains a recovery strategy having a highest network anomaly recovery success rate based on network anomaly data and considering a time period, operator information, an anomaly cell, a network standard, an anomaly user proportion, and a user quantity.

Step 302: The server sends the first cell anomaly list to the first electronic device.

In some embodiments of this application, the first cell anomaly list includes N anomaly time periods and a network recovery strategy corresponding to each anomaly time period, where the N anomaly time periods are time periods in which a network anomaly occurs when a second electronic device uses the network of the first cell, and the second electronic device has the same operator as the first electronic device.

In some embodiments of this application, the server receives the target data packet sent by the first electronic device, and sends the first cell anomaly list to the first electronic device. In this way, the first electronic device executes, according to the information in the first cell anomaly list, the network recovery strategy corresponding to the network anomaly, to avoid network use discontinuity caused by the network anomaly, and effectively resolve the network anomaly problem, thereby improving smoothness and continuity of using the network by the electronic device.

It should be noted that, a specific solution of the network anomaly recovery method on the server side is the same as a specific solution of the network anomaly recovery method on the first electronic device side. For details, refer to detailed descriptions of the first electronic device side, and details are not described herein again.

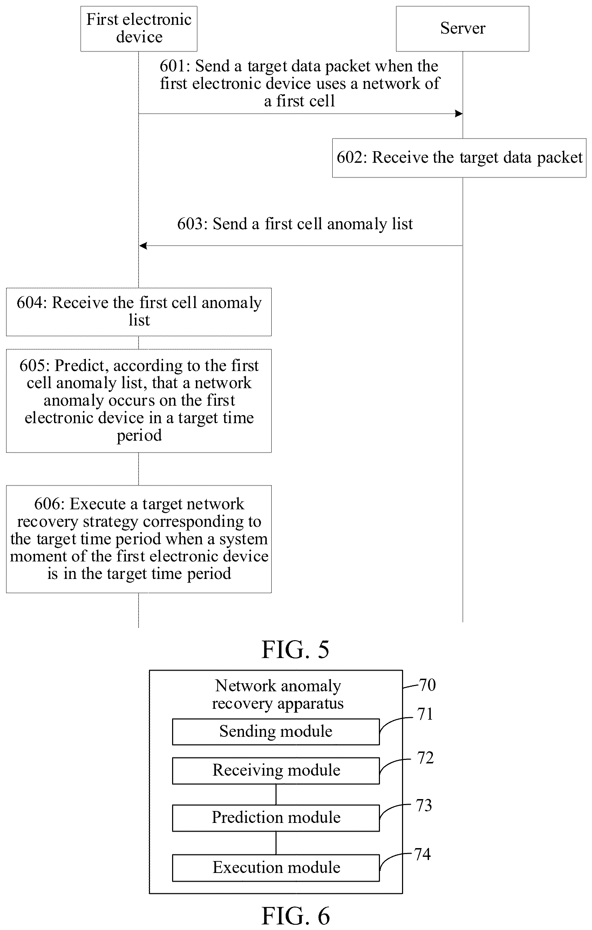

Some embodiments of this application provide a network anomaly recovery method. FIG. 5 shows a process of interaction between a first electronic device and a server that is related in the network anomaly recovery method provided in the embodiments of this application. The following step 601 to step 606 are included.

Step 601: A first electronic device sends a target data packet to a server when the first electronic device uses a network of a first cell.

Step 602: The server receives the target data packet sent by the first electronic device.

Step 603: The server sends a first cell anomaly list to the first electronic device.

Step 604: The first electronic device receives the first cell anomaly list sent by the server.

Step 605: The first electronic device predicts, according to the first cell anomaly list, that a network anomaly occurs on the first electronic device in a target time period.

Step 606: Execute, when a system moment of the first electronic device is in the target time period, a target network recovery strategy corresponding to the target time period.

It should be noted that, for detailed descriptions of step 601 to step 606 and a beneficial effect, refer to descriptions of the foregoing embodiment, and details are not described herein again.

It should be noted that, in the network anomaly recovery method provided in the embodiments of this application, an execution entity may be a network anomaly recovery apparatus. In this embodiment of this application, the network anomaly recovery apparatus performing the network anomaly recovery method is used as an example to describe the network anomaly recovery apparatus provided in this embodiment of this application.

FIG. 6 is a possible schematic structural diagram of a network anomaly recovery apparatus according to an embodiment of this application. As shown in FIG. 6, the network anomaly recovery apparatus 70 may include: a sending module 71, a receiving module 72, a prediction module 73, and an execution module 74.

The sending module 71 is configured to send a target data packet to a server when the first electronic device uses a network of a first cell, where the target data packet includes cell information of the first cell and operator information of the first electronic device.

The receiving module 72 is configured to receive a first cell anomaly list sent by the server, where the first cell anomaly list includes N anomaly time periods and a network recovery strategy corresponding to each anomaly time period, where the N anomaly time periods are time periods in which a network anomaly occurs when a second electronic device uses the network of the first cell, and the second electronic device has the same operator as the first electronic device.

The prediction module 73 is configured to predict, according to the first cell anomaly list, that a network anomaly occurs on the first electronic device in a target time period.

The execution module 74 is configured to execute, when a system moment of the first electronic device is in the target time period, a target network recovery strategy corresponding to the target time period, where N is a positive integer.

An embodiment of this application provides a network anomaly recovery apparatus. Before a network anomaly occurs, the network anomaly recovery apparatus may send the target data packet to the server and receive the first cell anomaly list sent by the server. When the system moment of the first electronic device is in the target time period, the network anomaly recovery apparatus executes the network recovery strategy corresponding to the network anomaly in advance, to avoid network use discontinuity caused by the network anomaly, and effectively resolve the network anomaly problem, thereby improving smoothness and continuity of using the network by the electronic device.

In some embodiments of this application, information in the first cell anomaly list is anomaly information that corresponds to both the cell information of the first cell and the operator information of the first electronic device. The cell anomaly list includes: an anomaly time period in which an anomaly occurs when each cell is in use and a network recovery strategy corresponding to the anomaly time period.

In some embodiments of this application, the cell anomaly list further includes at least one of the following: a network standard corresponding to a cell, operator information corresponding to an electronic device when an anomaly occurs in a network of the cell, a geographic area corresponding to the cell, a cell identifier, a user quantity in each anomaly time period in the cell, and an anomaly user proportion in each anomaly time period in the cell.

In some embodiments of this application, the apparatus 70 further includes:

an obtaining module and a determining module. The obtaining module is configured to obtain, before the execution module 74 executes the target network recovery strategy, M network recovery strategies corresponding to the target time period, where the M network recovery strategies are network recovery strategies that are executed by the second electronic device when a number of anomalies exceeds a preset threshold. The determining module is configured to determine a network recovery strategy whose recovery success rate is greater than or equal to a threshold in the M network recovery strategies as the target network recovery strategy, where M is a positive integer.

In some embodiments of this application, the apparatus 70 further includes: a write module. The write module is configured to: when detecting that a network anomaly occurs on the first electronic device, write, into a cell anomaly list, an anomaly time period in which the network anomaly occurs on the first electronic device and a network recovery strategy used by a user afterwards.

The network anomaly recovery apparatus in the embodiments of this application may be an electronic device, or may be a component in the electronic device, for example, an integrated circuit or a chip. The electronic device may be a terminal, or may be a device other than the terminal. For example, the electronic device may be a mobile phone, a tablet computer, a notebook computer, a handheld computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like, or the electronic device may be a server, a network attached storage (network attached storage, NAS), a personal computer (personal computer, PC), a television (television, TV), a cash machine, a self-service machine, or the like. This is not specifically limited in the embodiments of this application.

The network anomaly recovery apparatus in the embodiments of this application may be an apparatus having an operating system. The operating system may be an Android (Android) operating system, may be an ios operating system, and may be further another possible operating system. This is not specifically limited in this embodiment of this application.

The network anomaly recovery apparatus provided in the embodiments of this application can implement various processes implemented by the foregoing method embodiments. To avoid repetition, details are not described herein again.

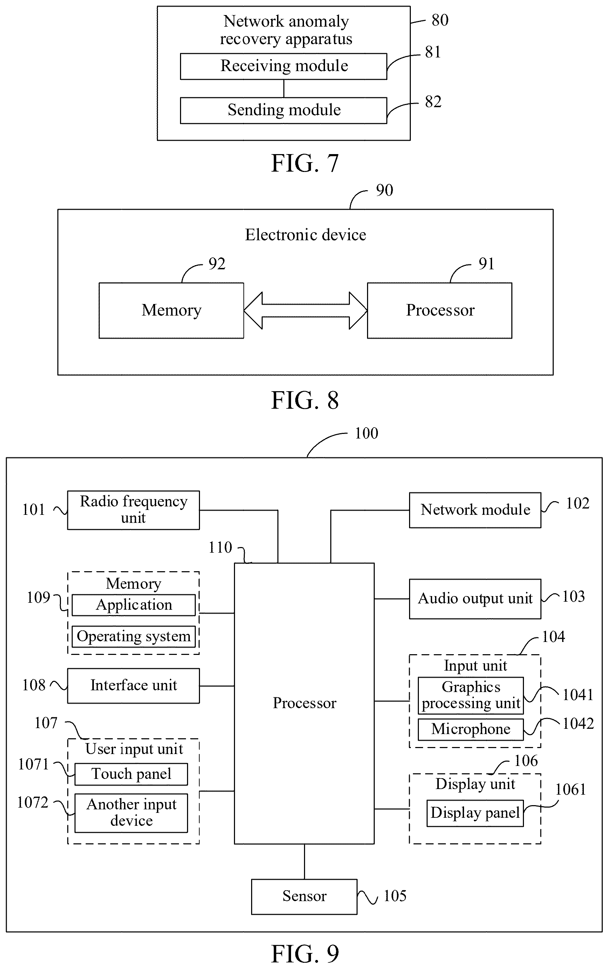

FIG. 7 is a possible schematic structural diagram of a network anomaly recovery apparatus according to an embodiment of this application. As shown in FIG. 7, the network anomaly recovery apparatus 80 may include a receiving module 81 and a sending module 82.

The receiving module 81 is configured to receive a target data packet sent by a first electronic device, where the target data packet includes cell information of a first cell and operator information of the first electronic device, and the first cell is a cell of a network used by the first electronic device.

The sending module 82 is configured to send a first cell anomaly list to the first electronic device, where the first cell anomaly list includes: N anomaly time periods and a network recovery strategy corresponding to each anomaly time period, where the N anomaly time periods are time periods in which a network anomaly occurs when a second electronic device uses a network of the first cell, and the second electronic device has the same operator as the first electronic device.

An embodiment of this application provides a network anomaly recovery apparatus. Before a network anomaly occurs, the network anomaly recovery apparatus may send the target data packet to the server and receive the first cell anomaly list sent by the server. When the system moment of the first electronic device is in the target time period, the network anomaly recovery apparatus executes the network recovery strategy corresponding to the network anomaly in advance, to avoid network use discontinuity caused by the network anomaly, and effectively resolve the network anomaly problem, thereby improving smoothness and continuity of using the network by the electronic device.

In some embodiments of this application, information in the first cell anomaly list is anomaly information that corresponds to both the cell information of the first cell and the operator information of the first electronic device. The apparatus 80 further includes a training module. The training module is configured to perform, before receiving the target data packet sent by the first electronic device, training based on historical network usage data of each cell, to obtain the cell anomaly list, where the cell anomaly list includes: an anomaly time period in which an anomaly occurs when each cell is in use and a network recovery strategy corresponding to the anomaly time period.

The network anomaly recovery apparatus provided in the embodiments of this application can implement various processes implemented by the foregoing method embodiments. To avoid repetition, details are not described herein again.

In some embodiments of this application, as shown in FIG. 8, an embodiment of this application further provides an electronic device 90, including a processor 91 and a memory 92, where the memory 92 stores a program or instructions executable on the processor 91. When the program or the instructions are executed by the processor 91, the steps of the network anomaly recovery method embodiments are implemented, and the same technical effect can be achieved. To avoid repetition, details are not described herein.

It should be noted that, the electronic device in the embodiments of this application includes the mobile electronic device and the non-mobile electronic device.

FIG. 9 is a schematic diagram of a hardware structure of an electronic device according to an embodiment of this application.

The electronic device 100 includes, but is not limited to, components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply (such as a battery) for supplying power to the components. The power supply may be logically connected to the processor 110 through a power supply management system, to implement functions such as charging, discharging, and power consumption management through the power supply management system. The electronic device structure shown in FIG. 9 does not constitute a limitation on the electronic device, and the electronic device may include more or fewer components than those shown in the figure, or combine some components, or have different component arrangements. This is not described herein again.

The radio frequency unit 101 is configured to send a target data packet to a server when the first electronic device uses a network of a first cell, where the target data packet includes cell information of the first cell and operator information of the first electronic device; and receive a first cell anomaly list sent by the server, where the first cell anomaly list includes N anomaly time periods and a network recovery strategy corresponding to each anomaly time period. The N anomaly time periods are time periods in which a network anomaly occurs when a second electronic device uses the network of the first cell, and the second electronic device has the same operator as the first electronic device.

The processor 110 is configured to predict, according to the first cell anomaly list, that a network anomaly occurs on the first electronic device in a target time period; and execute, when a system moment of the first electronic device is in the target time period, a target network recovery strategy corresponding to the target time period, where N is a positive integer.

An embodiment of this application provides an electronic device. Before the network anomaly occurs, the electronic device may send the target data packet to the server and receive the first cell anomaly list sent by the server. When the system moment of the first electronic device is in the target time period, the electronic device executes the network recovery strategy corresponding to the network anomaly in advance, to avoid network use discontinuity caused by the network anomaly, and effectively resolve the network anomaly problem, thereby improving smoothness and continuity of using the network by the electronic device.

In some embodiments of this application, information in the first cell anomaly list is anomaly information that corresponds to both the cell information of the first cell and the operator information of the first electronic device. The cell anomaly list includes: an anomaly time period in which an anomaly occurs when each cell is in use and a network recovery strategy corresponding to the anomaly time period.

In some embodiments of this application, the cell anomaly list further includes at least one of the following: a network standard corresponding to a cell, operator information corresponding to an electronic device when an anomaly occurs in a network of the cell, a geographic area corresponding to the cell, a cell identifier, a user quantity in each anomaly time period in the cell, and an anomaly user proportion in each anomaly time period in the cell.

In some embodiments of this application, the processor 110 is further configured to obtain, before executing the target network recovery strategy, M network recovery strategies corresponding to the target time period, where the M network recovery strategies are network recovery strategies that are executed by the second electronic device when a number of anomalies exceeds a preset threshold; and determine a network recovery strategy whose recovery success rate is greater than or equal to a threshold in the M network recovery strategies as the target network recovery strategy, where M is a positive integer.

In some embodiments of this application, the memory 109 is configured to: when detecting that a network anomaly occurs on the first electronic device, write, into a cell anomaly list, an anomaly time period in which the network anomaly occurs on the first electronic device and a network recovery strategy used by a user afterwards.

The electronic device provided in the embodiments of this application can implement various processes implemented by the foregoing method embodiments, and can achieve the same technical effects. To avoid repetition, details are not described herein.

For specific beneficial effects of the implementations in this embodiment, refer to beneficial effects of corresponding implementations in the foregoing method embodiment. To avoid repetition, details are not described herein again.

It should be understood that, in the embodiments of this application, the input unit 104 may include a graphics processing unit (Graphics Processing Unit, GPU) 1041 and a microphone 1042, and the graphics processing unit 1041 processes static pictures or video image data obtained by an image capturing apparatus (such as a camera) in a video capturing mode or an image capturing mode. The display unit 106 may include a display panel 1061, and the display panel 1061 may be configured in a form such as a liquid crystal display or an organic light-emitting diode. The user input unit 107 includes at least one of a touch panel 1071 and another input device 1072. The touch panel 1071 is also referred to as a touchscreen. The touch panel 1071 may include two parts, a touch detection apparatus and a touch controller. The another input device 1072 may include, but is not limited to, a physical keyboard, a functional key (such as a volume control key or a switch key), a trackball, a mouse, and a joystick. Details are not described herein.

The memory 109 may be configured to store software programs and various data. The memory 109 may mainly include a first storage area for storing a program or instructions and a second storage area for storing data. The first storage area may store an operating system, an application or instructions required by at least one function (for example, a sound playback function or an image playback function), and the like. In addition, the memory 109 may include a volatile memory or a non-volatile memory. Alternatively, the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 109 in this embodiment of this application includes, but is not limited to, these memories and a memory of any other suitable type.

The processor 110 may include one or more processing units. Optionally, the processor 110 integrates an application processor and a modem processor. The application processor mainly processes and involves in operations of the operating system, a user interface, an application, and the like. The modem processor, for example, a baseband processor, mainly processes a wireless communication signal. It can be understood that, the modem processor may not be integrated into the processor 110.

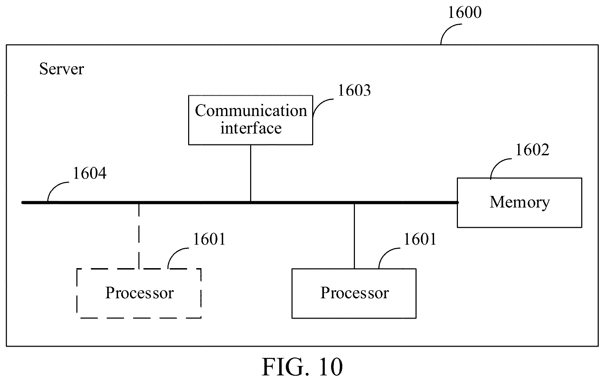

In some embodiments of this application, as shown in FIG. 10, the embodiments of this application further provide a server, including a processor 1601 shown in FIG. 10, a memory 1602, and a computer program on the memory 1602 and executed by the processor 1601, where when executed by the processor 1601, the computer program implements the various processes of the method embodiment, and the same technical effect can be achieved. Details are not described herein again.

In some embodiments of this application, FIG. 10 is a schematic diagram of a hardware structure of a server according to an embodiment of this application. As shown in FIG. 10, the server 1600 may include one or more processors 1601, a memory 1602, a communication interface 1603, and a bus 1604.

The processor 1601 may be configured to receive, through the bus 1604 and the communication interface 1603, a target data packet sent by a first electronic device, where the target data packet includes cell information of a first cell and operator information of the first electronic device, and the first cell is a cell of a network used by the first electronic device; and send, through the bus 1604 and the communication interface 1603, a first cell anomaly list to the first electronic device, where the first cell anomaly list includes N anomaly time periods and a network recovery strategy corresponding to each anomaly time period. The N anomaly time periods are time periods in which a network anomaly occurs when a second electronic device uses the network of the first cell, and the second electronic device has the same operator as the first electronic device.

In this embodiment of the present invention, the one or more processors 1601, the memory 1602, and the communication interface 1603 are mutually connected through the bus 1604. The bus 1604 may be a peripheral component interconnect (peripheral component interconnect, PCI) bus, an extended industry standard architecture (extended industry standard architecture, EISA) bus, or the like. The bus 1604 may be classified into an address bus, a data bus, a control bus, and the like. For ease of description, the bus in FIG. 10 is represented by using only one bold line, but which does not indicate that there is only one bus or one type of bus. In addition, the server 1600 may further include some functional module that are not shown, which are not described herein in detail.

An embodiment of this application provides a network anomaly recovery apparatus. The network anomaly recovery apparatus receives a target data packet sent by a first electronic device, and sends a first cell anomaly list to the first electronic device. In this way, before a network anomaly occurs, the network anomaly recovery apparatus may send the target data packet to the server and receive the first cell anomaly list sent by the server. When the system moment of the first electronic device is in the target time period, the network anomaly recovery apparatus executes the network recovery strategy corresponding to the network anomaly in advance, to avoid network use discontinuity caused by the network anomaly, and effectively resolve the network anomaly problem, thereby improving smoothness and continuity of using the network by the electronic device.

In some embodiments of this application, information in the first cell anomaly list is anomaly information that corresponds to both the cell information of the first cell and the operator information of the first electronic device.

In some embodiments of this application, the processor 1601 is specifically configured to perform, before receiving the target data packet sent by the first electronic device, training based on historical network usage data of each cell, to obtain the cell anomaly list. The cell anomaly list includes: an anomaly time period in which an anomaly occurs when each cell is in use and a network recovery strategy corresponding to the anomaly time period.

An embodiment of this application further provides a readable storage medium. The readable storage medium stores a program or instructions. When the program or the instructions are executed by a processor, the various processes of the network anomaly recovery method embodiments are implemented, and the same technical effect can be achieved. To avoid repetition, details are not described herein again.

The processor is a processor in the electronic device described in the foregoing embodiment. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to execute a program or instructions, to implement the various processes of the network anomaly recovery method embodiments, and a same technical effect can be achieved. To avoid repetition, details are not described herein again.

It should be understood that, the chip mentioned in the embodiments of this application may be further referred to as a system-level chip, a system chip, a chip system, a system-on-chip, or the like.

An embodiment of this application provides a computer program product. The program product is stored in a storage medium. When the program product is executed by at least one processor, the various processes of the network anomaly recovery method embodiments are implemented, and the same technical effect can be achieved. To avoid repetition, details are not described herein again.

It should be noted that, the terms "include", "comprise" or any other variants mean to cover the non-exclusive inclusion, so that the processes, methods, objects, or apparatuses which include a series of elements not only include those elements, but also include other elements which are not clearly listed, or include inherent elements of the processes, methods, objects, or apparatuses. Without more limitations, elements defined by the sentence "including one" does not exclude that there are still other same elements in the processes, methods, objects, or apparatuses. In addition, it should be noted that, the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the related art, may be presented in the form of a computer software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A network anomaly recovery method, applied to a first electronic device, wherein the method comprises:
sending a target data packet to a server when the first electronic device uses a network of a first cell, wherein the target data packet comprises cell information of the first cell and operator information of the first electronic device;
receiving a first cell anomaly list sent by the server, wherein the first cell anomaly list comprises N anomaly time periods and a network recovery strategy corresponding to each anomaly time period, wherein the N anomaly time periods are time periods in which a network anomaly occurs when a second electronic device uses the network of the first cell, and the second electronic device has a same operator as the first electronic device;
predicting, according to the first cell anomaly list, that a network anomaly occurs on the first electronic device in a target time period; and
executing, when a system moment of the first electronic device is in the target time period, a target network recovery strategy corresponding to the target time period, wherein N is a positive integer.

2. The method according to claim 1, wherein information in the first cell anomaly list is anomaly information that corresponds to both the cell information of the first cell and the operator information of the first electronic device in a cell anomaly list, wherein
the cell anomaly list comprises: an anomaly time period in which an anomaly occurs when each cell is in use and a network recovery strategy corresponding to the anomaly time period.

3. The method according to claim 2, wherein the cell anomaly list further comprises at least one of the following: a network standard corresponding to a cell, operator information corresponding to an electronic device when an anomaly occurs in a network of the cell, a geographic area corresponding to the cell, a cell identifier, a user quantity in each anomaly time period in the cell, and an anomaly user proportion in each anomaly time period in the cell.

4. The method according to claim 1, wherein before the executing a target network recovery strategy, the method further comprises:
obtaining M network recovery strategies corresponding to the target time period, wherein the M network recovery strategies are network recovery strategies that are executed by the second electronic device when a number of anomalies exceeds a preset threshold; and
determining a network recovery strategy whose recovery success rate is greater than or equal to a threshold in the M network recovery strategies as the target network recovery strategy, wherein M is a positive integer.

5. The method according to claim 1, wherein the method further comprises:
when detecting that a network anomaly occurs on the first electronic device, writing, into a cell anomaly list, an anomaly time period in which the network anomaly occurs on the first electronic device and a network recovery strategy used by a user afterwards.

6. A network anomaly recovery method, applied to a server, wherein the method comprises:
receiving a target data packet sent by a first electronic device, wherein the target data packet comprises cell information of a first cell and operator information of the first electronic device, and the first cell is a cell of a network used by the first electronic device; and
sending a first cell anomaly list to the first electronic device, wherein the first cell anomaly list comprises: N anomaly time periods and a network recovery strategy corresponding to each anomaly time period, wherein the N anomaly time periods are time periods in which a network anomaly occurs when a second electronic device uses a network of the first cell, and the second electronic device has a same operator as the first electronic device.

7. The method according to claim 6, wherein information in the first cell anomaly list is anomaly information that corresponds to both the cell information of the first cell and the operator information of the first electronic device in a cell anomaly list, wherein
before the receiving a target data packet sent by a first electronic device, the method further comprises:
performing training based on historical network usage data of each cell, to obtain the cell anomaly list, wherein the cell anomaly list comprises: an anomaly time period in which an anomaly occurs when each cell is in use and a network recovery strategy corresponding to the anomaly time period.

8. A network anomaly recovery apparatus, applied to a first electronic device, wherein the apparatus comprises: a sending module, a receiving module, a prediction module, and an execution module, wherein
the sending module is configured to send a target data packet to a server when the first electronic device uses a network of a first cell, wherein the target data packet comprises cell information of the first cell and operator information of the first electronic device;
the receiving module is configured to receive a first cell anomaly list sent by the server, wherein the first cell anomaly list comprises N anomaly time periods and a network recovery strategy corresponding to each anomaly time period, wherein the N anomaly time periods are time periods in which a network anomaly occurs when a second electronic device uses the network of the first cell, and the second electronic device has the same operator as the first electronic device;
the prediction module is configured to predict, according to the first cell anomaly list, that a network anomaly occurs on the first electronic device in a target time period; and
the execution module is configured to execute, when a system moment of the first electronic device is in the target time period, a target network recovery strategy corresponding to the target time period, wherein N is a positive integer.

9. The apparatus according to claim 8, wherein information in the first cell anomaly list is anomaly information that corresponds to both the cell information of the first cell and the operator information of the first electronic device, wherein
the cell anomaly list comprises: an anomaly time period in which an anomaly occurs when each cell is in use and a network recovery strategy corresponding to the anomaly time period.

10. The apparatus according to claim 9, wherein the cell anomaly list further comprises at least one of the following: a network standard corresponding to a cell, operator information corresponding to an electronic device when an anomaly occurs in a network of the cell, a geographic area corresponding to the cell, a cell identifier, a user quantity in each anomaly time period in the cell, and an anomaly user proportion in each anomaly time period in the cell.

11. The apparatus according to claim 8, wherein the apparatus further comprises:
an obtaining module, configured to obtain, before executing the target network recovery strategy, M network recovery strategies corresponding to the target time period, wherein the M network recovery strategies are network recovery strategies that are executed by the second electronic device when a number of anomalies exceeds a preset threshold; and
a determining module, configured to determine a network recovery strategy whose recovery success rate is greater than or equal to a threshold in the M network recovery strategies as the target network recovery strategy, wherein M is a positive integer.

12. The apparatus according to claim 8, wherein the apparatus further comprises:
a write module, configured to: when detecting that a network anomaly occurs on the first electronic device, write, into a cell anomaly list, an anomaly time period in which the network anomaly occurs on the first electronic device and a network recovery strategy used by a user afterwards.

13. A network anomaly recovery apparatus, applied to a server, wherein the apparatus comprises: a receiving module and a sending module, wherein
the receiving module is configured to receive a target data packet sent by a first electronic device, wherein the target data packet comprises cell information of a first cell and operator information of the first electronic device, and the first cell is a cell of a network used by the first electronic device; and
the sending module is configured to send a first cell anomaly list to the first electronic device, wherein the first cell anomaly list comprises: N anomaly time periods and a network recovery strategy corresponding to each anomaly time period, wherein the N anomaly time periods are time periods in which a network anomaly occurs when a second electronic device uses a network of the first cell, and the second electronic device has the same operator as the first electronic device.

14. The apparatus according to claim 13, wherein information in the first cell anomaly list is anomaly information that corresponds to both the cell information of the first cell and the operator information of the first electronic device, wherein the apparatus further comprises: a training module, configured to, perform, before receiving the target data packet sent by the first electronic device, training based on historical network usage data of each cell, to obtain the cell anomaly list, wherein the cell anomaly list comprises: an anomaly time period in which an anomaly occurs when each cell is in use and a network recovery strategy corresponding to the anomaly time period.

15. An electronic device, comprising a processor and a memory, wherein the memory stores a program or instructions executable on the processor; and when the program or the instructions are executed by the processor, the steps of the network anomaly recovery method according to any one of claims 1 to 5 are implemented.

16. A server, comprising a processor and a memory, wherein the memory stores a program or instructions executable on the processor; and when the program or the instructions are executed by the processor, the network anomaly recovery method according to claim 6 or 7 is implemented.

17. A readable storage medium, storing a program or instructions, wherein when the program or the instructions are executed by a processor, the steps of the network anomaly recovery method according to any one of claims 1 to 5 are implemented, or the steps of the network anomaly recovery method according to claim 6 or 7 are implemented.

18. A computer program product, wherein the program product is executed by at least one processor to implement the network anomaly recovery method according to any one of claims 1 to 5, or implement the network anomaly recovery method according to claim 6 or 7.

19. User equipment UE, wherein the UE is configured to perform the network anomaly recovery method according to any one of claims 1 to 5, or implement the network anomaly recovery method according to claim 6 or 7.
